Europäisches Patentamt

European Patent Office

Office européen des brevets

(19)

(11) Veröffentlichungsnummer : **0 101 857**
**B1**

(12) **EUROPÄISCHE PATENTSCHRIFT**

(45) Veröffentlichungstag der Patentschrift :
**07.09.88**

(51) Int. Cl.⁴ : **G 01 B   5/00**

(21) Anmeldenummer : **83106853.1**

(22) Anmeldetag : **13.07.83**

(54) **Mehrkoordinaten-Tastkopf.**

(30) Priorität : **21.08.82 DE 3231159**

(43) Veröffentlichungstag der Anmeldung :
**07.03.84 Patentblatt 84/10**

(45) Bekanntmachung des Hinweises auf die Patenterteilung : **07.09.88 Patentblatt 88/36**

(84) Benannte Vertragsstaaten :
**AT CH DE FR GB IT LI NL SE**

(56) Entgegenhaltungen :
**DE-A- 2 019 895**
**DE-A- 2 814 579**
**DE-C-   916 378**
**US-A- 3 121 370**

(73) Patentinhaber : **Dr. Johannes Heidenhain GmbH**
**Nansenstrasse 17**
**D-8225 Traunreut (DE)**

(72) Erfinder : **Ernst, Alfons, Dipl.-Ing.**
**Traunring 62**
**D-8225 Traunreut (DE)**

EP 0 101 857 B1

Jouve, 18, rue St-Denis, 75001 Paris, France

## Beschreibung

Die Erfindung bezieht sich auf einen Mehrkoordinaten-Tastkopf nach dem Oberbegriff des Anspruches 1.

Es sind aus einer Vielzahl von Druckschriften derartige Mehrkoodinaten-Tastköpfe bekannt. Im allgemeinen werden in diesen Druckschriften mechanische Einzelheiten beschrieben, die sich auf den konstruktiven Aufbau von Mehrkoordinaten-Tastköpfen beziehen.

So sind beispielsweise aus der DE-A-30 31 770, der DE-C-23 47 633, der GB-C-1 237 813 und der GB-C-1 599 758 Tastköpfe bekannt, bei denen die Tastiftdurchtrittsöffnung am Boden des Tastkopfgehäuses von einer elastischen Dichtung in Form eines Faltenbalges abgedeckt ist, der zum einen am Tastkopfgehäuse und zum anderen am Taststift befestigt ist, um die verbleibende Öffnung abzudecken und dennoch die Winkelbeweglichkeit des Taststiftes zu ermöglichen. Diese Faltenbälge aus Gummi oder aus gummielastischem Kunstsoff verhindern das Eindringen von Staub und Feuchtigkeit ins Innere des Tastkopfgehäuses.

In der US-A-3, 121, 370 ist ein Taster beschrieben, dessen Taststift in einem Kalottenlager axial verschiebbar und radial schwenkbar gelagert ist. Dieses Kalottenlager selbst ist ortsfest im Taststiftgehäuse angeordnet.

Bei dieser Anordnung dient das Kalottenlager als Drehpol bei einer radialen Auslenkung des Taststiftes. Das Kalottenlager hat also eine Lagerfunktion im eigentlichen Sinne des Wortes. Innerhalb des Kalottenlagers ist eine axiale Bohrung zur axialen Führung des Taststiftes vorgesehen. Die Abdichtung des Taststiftgehäuses erfolgt mit einem Faltenbalg.

Diese Faltenbalg-Abdichtungen waren ausreichend, solange die Tastköpfe nur an Koordinaten-Meßmaschinen eingesetzt wurden. In zunehmendem Maße werden jedoch Tastköpfe an numerisch gesteuerten Bearbeitungsmaschinen verwendet, bei denen Späne und Kühlflüssigkeit bzw. Schneidöle anfallen. Der Schutz gegen derartige Verschmutzungen ist bei Faltenbälgen mangelhaft, da heiße Späne die Faltenbälge zerstören können.

Bei einer Vorrichtung gemäß DE-A-28 24 579 dient eine Scheibenführung als radiale Lagerung und eine Führungsbuchse als axiale Lagerung des Taststiftes. Dort ist eine Schwenkbewegung des Taststiftes nicht möglich, da ausdrücklich eine Schwenkbewegung in radialer Richtung um einen Drehpunkt vermieden werden soll.

Der Erfindung liegt die Aufgabe zugrunde, einen Tastkopf zu schaffen, der die beschriebenen Nachteile der mit Faltenbalg-Abdeckungen versehenen Tastköpfe nicht aufweist, sondern mit einer Abdeckung der Taststiftdurchtrittsöffnung versehen ist, die unter anderem auch gegen heiße Späne resistent ist, und der dennoch große Taststiftauslenkungen ermöglicht, wobei eine Schwenkbarkeit des Taststiftes zulässig sein muß.

Diese Aufgabe wird durch die Merkmale des Anspruches 1 gelöst.

Die Vorteile eines Tastkopfes mit einer derartigen Abdeckung liegen darin, daß die Tastiftdurchtrittsöffnung von einer hitze- und feuchtigkeitsbeständigen Platte sicher abgedichtet wird, daß aber der Taststift dennoch nach allen Richtungen auslenkbar ist.

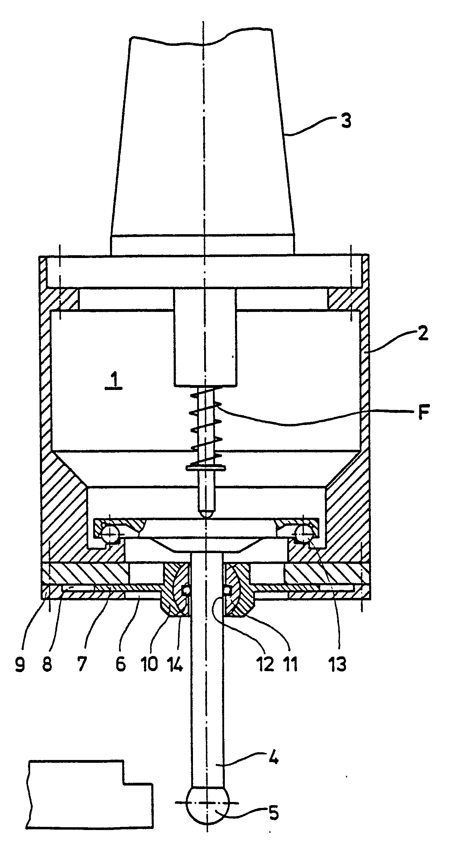

Mit Hilfe der Zeichnung soll anhand eines Ausführungsbeispiels die Erfindung noch näher erläutert werden.

Ein Tastkopf 1 weist ein Tastkopfgehäuse 2 auf. Das Tastkopfgehäuse 2 kann mittels eines Aufnahmedornes 3 in der Spindel einer nicht dargestellten Meß- oder Bearbeitungsmaschine montiert werden. Ein gegen die Rückstellkraft einer Feder F nach mehreren Richtungen auslenkbarer Taststift 4 ist im Innern des Tastkopfgehäuses 2 so gelagert, daß sein freies Ende 5 in der Ruhestellung immer eine exakte Nullage einnimmt.

Im Boden des Tastkopfgehäuses 2 befindet sich eine Öffnung 6, durch die der Taststift 4 aus dem Tastkopfgehäuse 2 herausragt und die deshalb als Taststiftdurchtrittsöffnung 6 bezeichnet wird.

Um das Innere des Tastkopfes 1 sicher gegen schädliche Einwirkungen von außen abzudichten, ist die Taststiftdurchtrittsöffnung 6 mit einer Platte 7 versehen, die am äußeren Umfang in einer Aussparung 8 angeordnet ist. Die Aussparung 8 befindet sich im Boden des Tastkopfgehäuses 2 und hat die Form eines Kreisringes mit geringem Querschnitt. Die Aussparung 8 wird am äußeren Umfang durch Ansätze 9 begrenzt, am inneren Umfang geht sie offen in die Taststiftdurchtrittsöffnung 6 über. In dem sich so ergebenen kreisringförmigen Spalt der Aussparung 8 ist die Platte 7 mit geringem Spiel und reibungsarm gelagert, so daß nur radiale Bewegungen der Platte 7 möglich sind. Der Durchmesser der Platte 7 ist so bemessen, daß sich bei der maximal zulässigen Auslenkung des Taststiftes 4 ein Anschlag des Plattenumfanges an den die Aussparung 8 begrenzenden Ansätzen 9 ergibt. Im Zentrum der Platte 7 befindet sich ein Kalottenlager 10 zur Aufnahme einer Kugel 11. Die Kugel 11 weist eine Bohrung 12 auf, die dem Durchmesser des Taststiftes 4 angepaßt ist, so daß ein spielarmes und reibungsarmes axiales Bewegen des Taststiftes 4 in der Bohrung 12 möglich ist.

Bei axialer Auslenkung des Taststiftes 4 gleitet der Taststift 4 axial in der Bohrung 12 nach oben und beaufschlagt einen nicht näher bezeichneten Meßwertumformer.

Bei einer Auslenkung des Taststiftes 4, die von der axialen Richtung abweicht, wird aufgrund der Taststiftlagerung 13 im Innern des Tastkopfgehäuses 2 der Taststift 4 geschwenkt, d. h., seine Achse schließt gegenüber der durch die Spindel bestimmten Mittelachse einen Winkel ein. Die Auslenkung des Taststiftes 4 bewirkt ein Auslenkungssignal des nicht näher bezeichneten Meßumformers. Dieser Vorgang ist bei derartigen Tastköpfen bei einer Auslenkung von 10 μm sicher abgeschlossen.

Das geringe Spiel im Spalt zwischen dem Taststift 4 und der Bohrung 12 erlaubt den Einsatz einer elastischen Dichtung 14, die den geringen Spalt zwischen Taststift 4 und Bohrung 12 nochmals abdichtet. In diesem Bereich, der in einer Größenordnung von 20 μm-100 μm liegt, ist der Vorgang der Auslösung des Auslenkungssignals sicher abgeschlossen, aber der Spaltbereich ist klein genug, um das Innere des Tastkopfgehäuses 2 vor heißen Spänen zu schützen, die ja die elastische Dichtung 14 zerstören könnten. Das bedeutet, daß die zum reibungsarmen Bewegen der Anordnung erforderlichen kleinen Spalte gegebenenfalls noch durch elastische Dichtungen 14 abgedichtet werden können, ohne daß dadurch die Nachteile der bekannten Anordnungen auftreten können.

Bei weiterer Auslenkung des Taststiftes — die aus Sicherheitsgründen möglich sein muß — vollzieht sich dann folgender Vorgang : Die den Taststift 4 umgebende Kugel 11 verdreht sich in der Kalottenlagerung 10. Durch die Kippung des Taststiftes 4 um einen Punkt in der Lagerung 13 wandert der Taststift 4 um einen geringen Betrag radial aus. Die Kalottenlagerung 10 mit der Kugel 11 bewegt sich dabei mit dem Taststift 4 in radialer Richtung. Die Platte 7 wird also in radialer Richtung in der Aussparung 8 verschoben. Eine Auslenkung des Taststiftes 4 in einer von der axialen Richtung abweichenden Richtung hat also zwangsläufig eine Verschiebung der Platte 7 in radialer Richtung zur Folge. Der nicht näher bezeichnete Meßwertumformer wird hingegen immer axial beaufschlagt, gleichgültig, in welcher Richtung der Taststift 4 ausgelenkt wird.

Der Meßwertumformer liefert bei beliebiger Taststiftauslenkung in bekannter Weise ein Signal, das in bekannter Weise ausgewertet werden kann.

Die maximal mögliche Taststiftauslenkung wird durch den Durchmesser der Platte 7 und den resultierenden Innendurchmesser der Aussparung 8 bestimmt.

Die maximal mögliche Taststiftauslenkung könnte noch erhöht werden, wenn der Boden des Tastkopfgehäuses 2, in der sich die Aussparung 8 befindet, seinerseits nach Art einer Kulissenführung gegen eine Rückstellkraft radial verschiebbar ist.

Durch die Gestaltung der vorstehenden Gehäuseabdichtung als radial bewegliche Platte 7 mit Kalottenlagerung 10 und darin gelagerter Kugel 11, die ihrerseits den Taststift 4 axial beweglich aufnimmt, wird eine robuste Abdichtung des Tastkopfgehäuses 2 ermöglicht, die unempfindlich gegenüber schädlichen Umgebungseinflüssen ist, und die sogar heißen Spänen widersteht.

**Patentansprüche**

1. Mehrkoordinaten-Tastkopf mit einem Tastkopfgehäuse (2), einem beweglich im Tastkopfgehäuse gelagerten Taststift (4), der mit seinem freien Ende (5) aus dem Tastkopfgehäuse herausragt, sowie mit einer vom Taststift durchragten Vorrichtung zum Abdecken (7-11, 14) der Taststiftaustrittsöffnung (6) am Tastkopfgehäuse, wobei die Abdeckvorrichtung in ihrem Zentrum eine kalottenlagerartige Druchführung (10-12) in Form einer kugel (11) mit Bohrung (12) aufweist, in welcher der Taststift reibungsarm (4) axial verschiebbar und radial schwenkbar gelagert ist, dadurch gekennzeichnet, daß die Abdeckvorrichtung als eine im Tastkopfgehäuse (2) reibungsarm radial bewegliche Platte (7) ausgebildet ist, die als Träger der kalottenlagerartigen Durchführung (10-12) dient.

2. Mehrkoordinaten-Tastkopf nach Anspruch 1, dadurch gekennzeichnet, daß im Boden des Tastkopfgehäuses (2) eine Aussparung (8) zur Aufnahme der Platte (7) vorgesehen ist und daß ein ringförmiger Ansatz (9) die radiale Bewegung der Platte (7) begrenzt.

3. Mehrkoordinaten-Tastkopf nach Anspruch 1, dadurch gekennzeichnet, daß wenigstens einer der zur reibungsarmen Funktion erforderlichen Spalte zwischen beweglichen Bauteilen mit einer elastischen Dichtung (14) abgedichtet ist.

4. Mehrkoordinaten-Tastkopf nach den Ansprüchen 1 und 2, dadurch gekennzeichnet, daß der die Aussparung (8) enthaltende Boden des Tastkopfgehäuses (2) nach Art einer Kulissenführung radial verschiebbar ist.

**Claims**

1. Multicoordinate sensing head with a sensing head housing (2), a sensing rod (4) movably mounted in the sensing head housing, with its free end (5) projecting out of the sensing head housing, as well as with a device (7-11, 14) passed through by the sensing rod for covering the sensing rod entry opening (6) in the sensing head housing, wherein the cover device has in its centre a ball-joint form of guide (10-12) in the form of a ball (11) with a bore (12), in which the sensing rod (4) is mounted with low friction axially displaceable and radially pivotal, characterized in that the cover device is formed as a plate (7) radially movable in the sensing head housing (2) with low friction, which serves as support for the ball-joint form of guide (10-12).

2. Multicoordinate sensing head according to claim 1, characterized in that there is provided in the bottom of the sensing head housing (2) a recess (8) for reception of the plate (7) and in that an annular rim (9) delimits the radial movement of the plate (7).

3. Multicoordinate sensing head according to claim 1, characterized in that at least one of the gaps needed for the low friction action between movable components is sealed with an elastic seal (14).

4. Multicoordinate sensing head according to claims 1 and 2, characterized in that the bottom of the sensing head housing (2) containing the recess (8) is radially displaceable in the manner of a gate guide.

**Revendications**

1. Palpeur multi-axial comprenant un boîtier de palpeur (2), une tige de palpeur (4) qui est montée mobile dans le boîtier de palpeur et qui fait saillie du boîtier du palpeur par son extrémité libre (5), ainsi qu'un dispositif (7-11, 14) de recouvrement de l'ouverture (6) de sortie de la tige de palpeur sur le boîtier de palpeur, ce dispositif étant traversé par la tige de palpeur et possèdant en son centre une traversée (10-12) du type palier à rotule sous la forme d'une bille (11) avec un trou (12), dans lequel la tige de palpeur (4) est montée mobile en translation axiale et pivotant radialement avec un faible frottement, caractérisé en ce que le dispositif de recouvrement est réalisé en tant que plaque (7) qui est mobile radialement avec un faible frottement dans le boîtier de palpeur (2) et qui sert de support pour la traversée (10-12) du type palier à rotule.

2. Palpeur multi-axial selon la revendication 1, caractérisé en ce que dans le fond du boîtier de palpeur (2) il est prévu un évidement (8) pour la réception de la plaque (7) et qu'un épaulement (9) annulaire limite le mouvement radial de la plaque (7).

3. Palpeur multi-axial selon la revendication 1, caractérisé en ce qu'au moins l'un des interstices, nécessaires au fonctionnement à faible frottement, entre des éléments mobiles est étanchéifié par un joint (14) élastique.

4. Palpeur multi-axial selon les revendications 1 et 2, caractérisé en ce que le fond du boîtier de palpeur (2) possédant l'évidement (8) est mobile radialement de la manière d'un guide à coulisse.